# EUROPEAN PATENT APPLICATION

(11) **EP 1 914 934 A1**
(43) Date of publication of application: **23.04.2008**
(21) Application number: 06291602.8
(22) Date of filing: 16.10.2006
(51) Int. Cl.: H04L 12/24

(54) **Point-to-point protocol data transmission**

(71) Applicant: Alcatel Lucent, 75008 Paris (FR)
(72) Inventor: Pauwels, Ludwig Alice Julienne, 9120 Beveren (BE); Reynders, Paul, 2100 Deurne (BE)
(74) Representative: Narmon, Gisèle Marie Thérèse

(57) **Abstract**

Methods for transmitting data according to point-to-point protocols from first devices (1) to second devices (2) via logical links (3) transmit (52) requests comprising specifications for specifying said data from second devices (2) to first devices (1) and transmit (55) responses comprising said data from first devices (1) to second devices (2) in response to receptions of requests. To allow these methods also to be used in "bonding" environments wherein logical links (3) comprise several physical links (31, 32), the methods insert (54), at first devices (1), per physical link (31, 32) one or more containers comprising information about the physical link (31, 32) into responses, and detect (56), at second devices (2), the one or more containers. Requests may comprise descriptors for defining parameters of physical links (31, 32). First containers identify the physical links (31, 32) and second containers specify parameters of the physical links (31, 32). Parameters define numbers of coding violations, errors, corrected blocks and/or uncorrected blocks.

## Description

The invention relates to a method for transmitting data according to a point-to-point protocol from a first device to a second device via a logical link, which method comprises the steps of
- transmitting a request from the second device to the first device, which request comprises a specification for specifying said data, and
- transmitting a response from the first device to the second device in response to a reception of the request, which response comprises said data.

Examples of such a point-to-point protocol are versions of IEEE 802.3, without excluding other point-to-point protocols. Examples of such a first device are customer premises equipment devices and examples of such a second device are access multiplexers, or vice versa.

A prior art method is of common general knowledge. The second device sends a request to the first device. The request comprises a specification for specifying the data to be transmitted from the first device to the second device. The first device sends, in response to a reception of the request, a response to the second device. The response comprises said data. This all is done via the logical link between the first and second devices. The point-to-point protocol assumes that this logical link comprises one physical link.

US 20040062198 discloses an aggregation of several physical links into one logical link. This is also known as "bonding".

When using the prior art method in a "bonding" environment, the prior art method cannot distinguish between the several physical links of the one logical link.

It is an object of the invention, inter alia, to provide a method as defined above that can distinguish several physical links of a logical link from each other.

The method according to the invention is characterized in that the logical link comprises at least two physical links and in that the method comprises the steps of
- inserting, at the first device, at least one container per physical link into the response, which at least one container comprises information about the physical link, and
- detecting, at the second device, the at least one container.

By, at the first device, inserting at least one container per physical link into the response, and by, at the second device, detecting the at least one container, which at least one container comprises information about (for example an identity of) the physical link, the method according to the invention is able to distinguish between the several physical links of the logical link.

It should be noted that it is known art to exchange requests and responses each comprising a container. However, firstly, these requests and responses do not comprise a container per physical link, and secondly, according to the invention the requests do not need to be modified and do not need to comprise a container.

The method according to the invention is further advantageous, inter alia, in that the requests do not need to be modified in the second device.

An embodiment of the method according to the invention is characterized in that the request comprises a descriptor for defining at least one parameter of at least one physical link.

By letting a descriptor in a request describe at least one parameter of at least one physical link, the first device is informed that said at least one parameter is to be provided to the second device.

An embodiment of the method according to the invention is characterized in that the at least one container per physical link comprises a first container for identifying the physical link and a second container for specifying a parameter of the physical link.

Either each specifying container is preferably preceded by an identifying container per physical link, or several specifying containers are preferably preceded by an identifying container per physical link.

An embodiment of the method according to the invention is characterized in that the parameter defines a number of coding violations, errors, corrected blocks and/or uncorrected blocks. Coding violations are for example protocol coding violations, and errors are for example cyclic redundancy check errors. Numbers of (un)corrected blocks indicate how many blocks have been (un)corrected. Other parameters are not to be excluded.

The invention also relates to a computer program product for performing the steps of the method according to the invention.

The invention also relates to a medium for storing and comprising the computer program product according to the invention.

The invention also relates to a first device for transmitting data according to a point-to-point protocol to a second device via a logical link.

The invention also relates to a second device for receiving data according to a point-to-point protocol from a first device via a logical link.

The invention also relates to a system comprising the first device according to the invention and comprising the second device according to the invention.

Preferably, one of the first and second devices is a customer premises equipment device and the other one of the first and second devices is an (Asynchronous Transfer Mode or Ethernet) access multiplexer.

Embodiments of the computer program product according to the invention and of the medium according to the invention and of the first device according to the invention and of the second device according to the invention and of the system according to the invention correspond with the embodiments of the method according to the invention.

The invention is based upon an insight, inter alia, that, even in case a request does not comprise a container, a container can be inserted into a response to the request. The invention is based upon a basic idea, inter alia, that at the first device, at least one container per physical link is to be inserted into the response, and at the second device, the at least one container is to be detected.

The invention solves the problem, inter alia, to provide a method as defined above that can distinguish several physical links of a logical link from each other. The method according to the invention is further advantageous, inter alia, in that the requests do not need to be modified in the second device, that sends the requests.

These and other aspects of the invention will be apparent from and elucidated with reference to the embodiments(s) described hereinafter.

Fig. 1 shows diagrammatically a system according to the invention comprising a first device according to the invention and a second device according to the invention, and

Fig. 2 shows a method according to the invention.

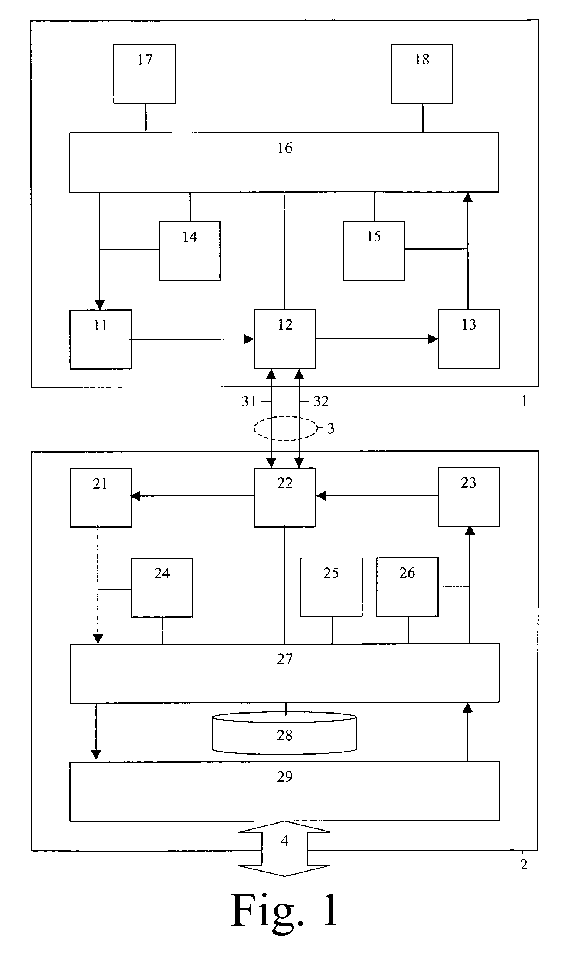

The system according to the invention shown in Fig. 1 comprises a first device 1 according to the invention and a second device 2 according to the invention. The first device 1 comprises a first transmitter 11 of which an input is coupled to an output of a first processor 16. An output of the first transmitter 11 is coupled to an input of a first interface 12, of which an output is coupled to an input of a first receiver 13. An output of the first receiver 13 is coupled to an input of the first processor 16. The first device 1 further comprises a first inserter 14 coupled to the first processor 16 and to the input of the first transmitter 11, and a first detector 15 coupled to the first processor 16 and to the output of the first receiver 13. The first processor 16 is further coupled to the first interface 12 and to a man machine interface 17 and to a first memory 18.

The second device 2 comprises a second transmitter 23 of which an input is coupled to an output of a second processor 27. An output of the second transmitter 23 is coupled to an input of a second interface 22, of which an output is coupled to an input of a second receiver 21. An output of the second receiver 21 is coupled to an input of the second processor 27. The second device 2 further comprises a second inserter 26 coupled to the second processor 27 and to the input of the second transmitter 23, and a second detector 24 coupled to the second processor 27 and to the output of the second receiver 21. The second processor 27 is further coupled to the second interface 22 and to an operator interface 25, a network interface 29 and a second memory 28. The network interface 29 is further coupled to a network link 4.

The first and second interfaces 12 and 22 are coupled to each other via a logical link 3, that comprises for example two physical links 31 and 32.

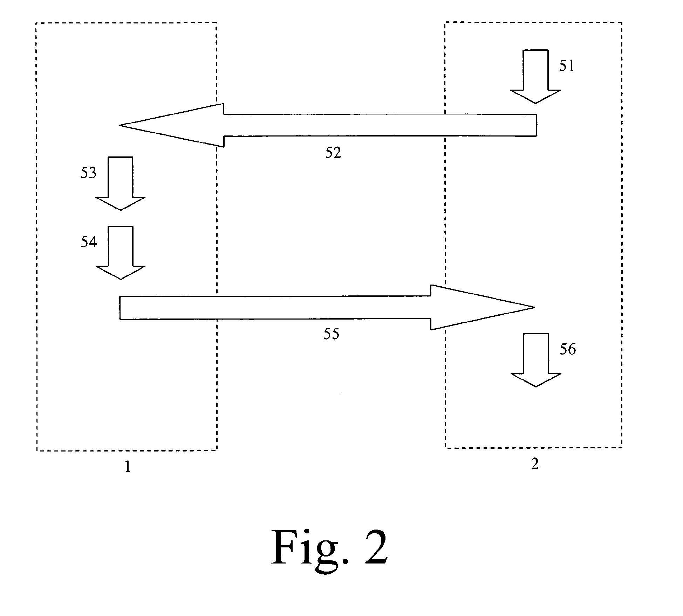

The method according to the invention shown in the Fig. 2 comprises for example the steps 51-56. The steps 51 and 56 are performed inside and/or near the second device 2, the steps 52 and 55 are performed between the first and second devices 1 and 2 and the steps 53 and 54 are performed inside and/or near the first device 1.

In a prior art situation, the second device 2 such as an access multiplexer sends a request to the first device 1 such as a customer premises equipment device. The request comprises a specification for specifying the data to be transmitted from the first device 1 to the second device 2 according to a point-to-point protocol. Examples of such a point-to-point protocol are versions of IEEE 802.3. The first device 1 sends, in response to a reception of the request, a response to the second device 2. The response comprises said data. This all is done via the logical link 3 between the first and second devices 1 and 2. The point-to-point protocol assumes that this logical link 3 comprises one physical link.

In case the logical link 3 comprises several physical links 31 and 32, which is also known as "bonding", the prior art method cannot distinguish between the several physical links 31 and 32 of the one logical link 3.

According to the invention, at the first device 1, at least one container is inserted via the first inserter 14 per physical link 31 and/or 32 into the response, and, at the second device 2, the at least one container is detected via the second detector 24. The container comprises information about (for example an identity of) the physical link 31 and/or 32. As a result, the method according to the invention is able to distinguish between the several physical links 31 and 32 of the logical link 3.

Preferably, the request comprises a descriptor for defining at least one parameter of at least one physical link 31 and/or 32. By letting a descriptor in a request define at least one parameter of at least one physical link 31 and/or 32, the first device 1 is informed that said at least one parameter is to be provided to the second device 2. The descriptor is for example inserted into the request at and/or near the second device 2 via the second inserter 26 and is for example detected at and/or near the first device 1 via the first detector 15. However, alternative ways for informing the first device 1 that information about the several links 31 and 32 is to be provided are not to be excluded.

Preferably, the at least one container per physical link 31 and/or 32 comprises a first container for identifying the physical link 31 and/or 32 and a second container for specifying a parameter of the physical link 31 and/or 32. Either each specifying container is located next to an identifying container per physical link 31 and/or 32, or a group of specifying containers is located next to an identifying container per physical link 31 and/or 32.

The parameter for example defines a number of coding violations, errors, corrected blocks and/or uncorrected blocks, without excluding other parameters.

So, in the Fig. 2, the steps 51-56 have the following meaning:
Step 51: Insert the descriptor into the request.
Step 52: Send the request from the second device 2 to the first device 1.
Step 53: Detect the descriptor in the request.
Step 54: Insert the containers per physical link 31 and/or 32 into the response.
Step 55: Send the response from the first device 1 to the second device 2.
Step 56: Detect the containers.

About the Fig. 1 and 2, it is observed that these Figures show an example only, without excluding other examples. The protocol is fully symmetrical, so each one of the devices 1 and 2 can be the sender and the other one can be the receiver etc.

In other words, for example protocols such as IEEE 802.3ah allow an exchange of data via a link, between both end points of this link. This includes data about the operation of the lower physical layer (e.g., bit error rate). The protocol definition takes as an implicit assumption that all data exchanged over this link is about this link. In case of bonding there are multiple physical links combined in one logical link. The protocol runs by definition at the logical link level. In order to exchange data about the lower physical layer, there is a need to identify about which of the individual physical links the data is about.

According to the protocol, one side sends a variable request to specify which data this side would like to receive. The peer side replies with a variable response containing this data. Every individual data item is identified by a "branch-leave" (the "branch" identifies the class, the "leave" identifies a specific attribute within the class, e.g. the "branch" could specify that it is the data of the physical layer, the "leave" could identify a specific counter maintained at the physical layer). The variable request contains a list of "branch-leave" combinations (called variable descriptors). As such the peer side interprets a first parameter as "branch", a second as "leave", a third as "branch" etc. The variable response contains a list of branch-leave-length-value combinations (called variable containers). So, for example a third parameter is a length value that allows the peer side to judge on the size of a value parameter, and allows the peer side to calculate where the second branch-leave-length-value combination will start.

According to the invention, the variable request is not modified. So, the variable request just contains variable descriptors (i.e. "branch-leave" combinations). When the peer side receives a variable request containing a descriptor identifying data of the physical link, then it returns in the variable response a container per physical link. The container itself does not include an identification of the physical link. Therefore such one or more physical link related containers are preceded by another container that contains an identification of the physical link. So, the invention does not change the protocol syntax, which is a great advantage.

An example of a request - response communication is as follows:
Variable request:

| | **Octets** | **Value** |
|---|---|---|
| **Header** | | |
| MAC destination @ | 6 | 0x0180C2000002 |
| MAC source @ | 6 | MAC source @ |
| Length/Type | 2 | 0x8809 |
| Subtype | 1 | 0x03 |
| FLAGS | 2 | 0x0050 |
| CODE | 1 | 0x02 |

| **Variable Descriptor for TC CRC Errors** | | |
|---|---|---|
| Branch | 1 | 0x07 |
| Leaf | 2 | 0x014C |
| **PAD** | 39 | All 0x00 |
| **FCS** | 4 | FCS |

Variable Response:

| | **Octets** | **Value** |
|---|---|---|
| **Header** | | |
| MAC destination @ | 6 | 0x0180C2000002 |
| MAC source @ | 6 | MAC source @ |
| Length/Type | 2 | 0x8809 |
| Subtype | 1 | 0x03 |
| FLAGS | 2 | 0x0050 |
| CODE | 1 | 0x03 |

| **Variable Container for PME identification** | | |
|---|---|---|
| Branch | 1 | 0x07 |
| Leaf | 2 | 0x014A |
| Width | 1 | 0x01 |
| Value | 1 | 0x01 |

| **Variable Container for TC CRC Errors** | | |
|---|---|---|
| Branch | 1 | 0x07 |
| Leaf | 2 | 0x014C |
| Width | 1 | 0x04 |
| Value | 4 | Counter for PME-1 |

| **Variable Container for PME identification** | | |
|---|---|---|
| Branch | 1 | 0x07 |
| Leaf | 2 | 0x014A |
| Width | 1 | 0x01 |
| Value | 1 | 0x02 |

| **Variable Container for TC CRC Errors** | | |
|---|---|---|
| Branch | 1 | 0x07 |
| Leaf | 2 | 0x014C |
| Width | 1 | 0x04 |
| Value | 4 | Counter for PME-2 |
| **PAD** | 16 | A11 0x00 |
| **FCS** | 4 | FCS |

It is also possible to request for multiple objects (branch leaf) in one request. Then the responder has the options:
- Precede every PME (Physical Medium Entity) related requested object with an identification of the PME.
- The identification of a particular PME is followed by multiple objects related to that PME, followed by the identification of another PME followed by multiple objects related to that PME etc.
The requestor does not necessarily need to specify the PME for which the requestor wants to receive information, in that case the responder can return the requested information for all PMEs in the bonding group. In fact, the prior art protocol does not allow to specify the PME for which the requestor wants to receive information. According to the invention, it has become possible to return information for each PME.

Summarizing, methods for transmitting data according to point-to-point protocols from first devices 1 to second devices 2 via logical links 3 transmit (52) requests comprising specifications for specifying said data from second devices 2 to first devices 1 and transmit (55) responses comprising said data from first devices 1 to second devices 2 in response to receptions of requests. To allow these methods also to be used in "bonding" environments wherein logical links 3 comprise several physical links 31, 32, the methods insert (54), at first devices 1, per physical link 31, 32 one or more containers comprising information about the physical link 31, 32 into responses, and detect (56), at second devices 2, the one or more containers. Requests may comprise descriptors for defining parameters of physical links 31, 32. First containers identify the physical links 31, 32 and second containers specify parameters of the physical links 31, 32. Parameters define numbers of coding violations, errors, corrected blocks and/or uncorrected blocks.

In Fig. 1 and 2, each coupling / connection may be a wired coupling / connection or a wireless coupling / connection. Any unit shown may be divided into sub-units, and any two or more units may be integrated into a new and larger unit. Any unit shown may comprise hardware and/or software. The computer program product according to the invention may be stored on and/or comprise a fixed medium such as the first and second memories 18 and 28 or a removable medium not shown. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well. The terms "a" and "an" do not exclude a possible presence of one or more pluralities. The steps and/or functions of transmitting, inserting and detecting do not exclude further steps and/or functions, like for example, inter alia, the steps and/or functions described for the Fig. 1 and 2 etc.

## Claims

1. Method for transmitting data according to a point-to-point protocol from a first device (1) to a second device (2) via a logical link (3), which method comprises the steps of
- transmitting (52) a request from the second device (2) to the first device (1), which request comprises a specification for specifying said data, and
- transmitting (55) a response from the first device (1) to the second device (2) in response to a reception of the request, which response comprises said data,
**characterized in that** the logical link (3) comprises at least two physical links (31, 32) and **in that** the method comprises the steps of
- inserting (54), at the first device (1), at least one container per physical link (31, 32) into the response, which at least one container comprises information about the physical link (31, 32), and
- detecting (56), at the second device (2), the at least one container.

2. Method as defined in the claim 1, **characterized in that** the request comprises a descriptor for defining at least one parameter of at least one physical link (31, 32).

3. Method as defined in the claim 1 or 2, **characterized in that** the at least one container per physical link (31, 32) comprises a first container for identifying the physical link (31, 32) and a second container for specifying a parameter of the physical link (31, 32).

4. Method as defined in the claim 3, **characterized in that** the parameter defines a number of coding violations, errors, corrected blocks and/or uncorrected blocks.

5. Computer program product for performing the steps of the method as defined in the claim 1.

6. Medium for storing and comprising the computer program product as defined in the claim 5.

7. First device (1) for transmitting data according to a point-to-point protocol to a second device (2) via a logical link (3), which first device (1) comprises
- a first receiver (13) for receiving a request from the second device (2), which request comprises a specification for specifying said data, and
- a first transmitter (11) for transmitting a response to the second device (2) in response to a reception of the request, which response comprises said data,
**characterized in that** the logical link (3) comprises at least two physical links (31, 32) and **in that** the first device (1) comprises
- an inserter (14) for inserting at least one container per physical link (31, 32) into the response, which at least one container comprises information about the physical link (31, 32).

8. Second device (2) for receiving data according to a point-to-point protocol from a first device (1) via a logical link (3), which second device (2) comprises
- a second transmitter (23) for transmitting a request from the second device (2) to the first device (1), which request comprises a specification for specifying said data, and
- a second receiver (21) for receiving a response from the first device (1), which response comprises said data,
**characterized in that** the logical link (3) comprises at least two physical links (31, 32) and **in that** the response comprises at least one container per physical link (31, 32), which at least one container comprises information about the physical link (31, 32), and **in that** the second device (2) comprises
- a detector (24) for detecting the at least one container.

9. System comprising the first device (1) as defined in the claim 7 and comprising the second device (2) as defined in the claim 8.

10. System as defined in the claim 9, **characterized in that** one of the first and second devices (1, 2) is a customer premises equipment device and the other one of the first and second devices (1, 2) is an access multiplexer.
